# EUROPEAN PATENT APPLICATION

(11) **EP 4 700 673 A1**
(43) Date of publication of application: **25.02.2026**
(21) Application number: 24196244.8
(22) Date of filing: 23.08.2024
(51) Int. Cl.: G06Q 10/08, G07C 5/00, B65D 79/02

(54) **A METHOD AND A SYSTEM FOR TRACKING THE REAL-TIME POSITION OF AN ASSET DURING TRANSPORT FROM AN ORIGIN LOCATION TO A DESTINATION LOCATION**

(71) Applicant: Controlant hf., 201 Kopavogur (IS)
(72) Inventor: ARNASON, Gudmundur Arni, 201 Kopavogur (IS); BRYNJULFSSON, Erlingur, 201 Kopavogur (IS)
(74) Representative: Inspicos P/S

(57) **Abstract**

The present invention relates to a method and a system for tracking in real-time the position of a shipment during transport from an origin location to a destination location where the shipment comprises a shipment-material uniquely identified via a unique shipment-material ID, where the shipment-material is configured to carry an asset during the transport. A logger device is provided configured to be attached to the shipment-material. The logger device is uniquely identified via a unique logger device ID and is paired to the shipment material. When a shipment order is created for an asset such as a pharmaceutical product, a unique shipment order ID is generated, and a subsequent pairing to the shipment-material and the logger device pairing. After completion of the transport of the asset at the destination location the second pairing to the asset is terminated, while the shipment-order pairing between the shipment-material and the logger device is maintained.

## Description

### FIELD OF THE INVENTION

The present invention relates to a method and a system for real-time position tracking of an asset containing a product during transport from an origin location to a destination location, and a real-time position tracking of the asset after the product has been delivered.

### BACKGROUND OF THE INVENTION

With the expansion and growth of global sourcing in the supply chain industry, more prevalent interest has been placed on automatic electronic monitoring of environment related parameters to increase food, drug safety, and improve food defense systems throughout all areas of production, processing, storage, transportation, and operations. Food and pharmaceutical products require proper handling of environment related parameters such as temperature during transport to assure shelf quality, longevity, and safety.

Logger devices are electronic monitoring devices commonly used for these purposes and are configured to be associated to an asset such as a pharmaceutical product via a shipment-material such as a pallet or boxes to automatically monitor and record various environmental related parameters of the assets throughout the supply chain, such as temperature, humidity, acceleration, and air pressure, over time. This may be done by placing logger device into a box preserving the asset or by placing a temperature sensor being a part of a logger device into the box or by incorporating a logger device into a pallet (e.g. via appropriate compartment integrated into the pallet). A recent example of importance of such logger devices is the temperature monitoring of the COVID-19 vaccines, which is a critical monitoring parameter.

Logger devices have a wireless communication module to allow them to transmit their positional data together with measured environmental related data of the asset wirelessly to an external control computer, hence, enabling a real time supply chain monitoring during the transport of the assets. This means that positional data of the logger device, and thus of the asset, together with measured environmental data such as the temperature of the assets are provided in real time. By doing so, it is possible to monitor the position and the environmental condition of the assets in real time. Thus, issues such as the temperature of the asset being too high or too low may be identified before these issues escalate which allows for proactive actions to prevent the assets from being damaged.

When a shipment is prepared a shipment order is created for the asset in a computer system containing all necessary details, such as the asset type, allowable temperature range, destination location, logger device ID, to name few. This is transmitted to an external control device that subsequently communicates the shipment order to the logger device associated with the assets. At the end of transport, the forementioned shipment order is terminated and the logger device is removed from the shipment-material and returned to service center where the logger device is re-charged and prepared to next shipment. Subsequently, the logger device is sent to the customer where the above-mentioned process is then repeated for next product to transport throughout the supply chain. This process is however costly and time consuming and in many instances, there is no need to re-charge the logger devices.

Moreover, the customer often orders a certain number of shipment-material such as x number of pallets and y number of boxes and logger devices to be used for monitoring the products carried by the shipment-material, and often orders more shipment-material than needed. Some of this shipment-material never returns after the transport is completed and the loggers have been separated from the shipment-material. Those shipment-material, which are meant to be used more than once to provide a higher level of ecological sustainability to the supply chain companies, are then usually abandoned in warehouses and in some instances are stolen.

Today, since the logger is separated from the shipment-material at the end of the shipment, the only way to locate the shipment-material is for the supply chain company to call the warehouse or shipment facility at the destination location and acquire about the shipment-material's status and whether it is being returned. This solution leads to many of the shipment-materials being lost after the shipment is completed, which is costly for the shipment companies that source such shipment-material as these assets are made from expensive materials and are meant to be for multiuse purposes. Hence, solutions today are greatly time consuming and inefficient to do.

### SUMMARY OF THE INVENTION

It is an object of the invention to overcome the above-mentioned problem and provide a more efficient and sustainable solution for both preparing real-time monitoring shipments for an asset throughout the supply chain, and also where the risk of losing the shipment-material after the shipment is completed may be avoided.

In a first aspect of the invention, a method is provided of tracking in real-time the position of a shipment during transport from an origin location to a destination location where the shipment comprises a shipment-material uniquely identified via a unique shipment-material ID, where the shipment-material is configured to carry an asset during the transport, the method comprising:
- providing a logger device configure to be attached to the shipment-material, where the logger device comprises a power source, a communication module and a processor for operating the power source and the communication module, where the communication module is configured to transmit during the transport the position data of the logger device and thus of the asset in real-time to an external control computer, where the logger device is uniquely identified via a unique logger device ID,

wherein the method further comprises:
   - performing, prior to the start of the transport, a shipment-material pairing between the unique logger device ID with the unique shipment-material ID,
   - preparing, via an input device, a shipment order for the shipment, where the shipment order contains information including the type of asset and destination location of the asset,
   - receiving, in response to the generated shipment order, a unique electronic shipment order ID for the shipment order, and
   - performing a shipment order pairing by means of pairing the unique shipment-material ID with the unique electronic shipment order ID,
wherein at the end of the shipment and after the asset has been delivered the shipment-material pairing between the unique logger device ID with the unique shipment-material ID is maintained while the shipment order pairing is terminated.

Thus, the position of the shipment-material may be tracked in real-time while it is being returned, which also enables the shipment-material together with the paired logger device to be used in multiple of separated shipments of assets having different unique electronic shipment order IDs and therefore an efficient and sustainable solution is provided for preparing real-time monitoring shipments for the asset throughout the supply chain.

One and the same logger device may therefore be used multiple of times before being re-charged, meaning that returning the logger device(s) to service center after each shipment where the logger device is re-charged is no longer necessary.

The shipment order may contain information such as details of the asset type (e.g. details of the pharmaceutical product), allowable temperature range for the asset, destination location, logger device ID, delivery address, just to name few.

The pairing may be performed by a pairing device such as a mobile phone at the original location or any device capable of scanning the IDs on the shipment-material and the logger devices.

In an embodiment, the communication module is further configured to transmit information about the power source's status data of the logger device to the external control computer, where the external computer is further configured to utilize the power source's status data in planning the use of the logger device for upcoming shipments. The power source may comprise any type of re-chargeable battery. Accordingly, it is possible to monitor when the logger device needs to be re-charged which enables planning ahead whether the shipment-material together with the paired logger device can be used for next shipment or not.

In an embodiment, the logger device is configured to be attached on the outside or inside of the shipment-material by using an adhesive material or by inserting it into a designated slot on the shipment-material. As an example, the shipment-material may be manufactured with a slot in mind for such loggers to be inserted into, where the shipment-material is (obviously) made for multiuse purpose.

In another embodiment, the unique electronic shipment ID is issued by the courier of the shipment and received by the external control computer where the shipment order pairing is performed. As an example, once the shipment ID was sent by the courier e.g. (FedEx), it would automatically be added to the shipment order.

In yet another embodiment of the current invention, the unique logger device ID comprises a code configured to be read and scanned by a scanning device, where the scanned code is utilized in the shipment-material pairing. This is mainly relevant when the logger device may be attached or inserted on the inside of the shipment-material, for example, the slot where the logger device is meant to be attached to must be transparent, allowing the code to be read by a scanning device.

In another embodiment, the shipment-material is selected from: a pallet, a box, a container or any means capable of carrying the asset from an origin location to a destination location. The term shipment-material may according to the present invention also be understood as any type of transport means, such as, but not limited to, a motorized transport vehicle such as van, cargo van, truck, a train, aerial vehicle such aircraft and drone. In each of the above-mentioned embodiment, the shipment-material can house the logger device by means of e.g. inserting it into a compartment on the outside or the inside of the shipment-material, such as by means of magnetically attaching it to a metallic shipment-material, or by use of double-sided tape etc..

In an embodiment, the step of pairing the unique logger device ID with the unique shipment-material ID, comprises scanning both IDs with a scanning device, where the scanned unique logger device ID and the unique shipment-material ID are subsequently paired, wherein the subsequent pairing also takes place within the scanning device.

In an embodiment, the termination of the shipment order pairing is done automatically in response to an event such as a geofence event or manually by an agent at the destination location. Hence, maintaining the pairing between the logger device and the shipment-material enables tracking the shipment-material through the logger device. This prevents the shipment-material from being lost after the shipment is completed.

In another embodiment of the current invention, the termination of the shipment order pairing triggers an inventory related signal indicating a change in the inventory of the asset. A fully automated solution is thus provided informing the manufacturer of the asset of the actual inventory status of the asset, i.e. whether the manufacturing must be increased, decreased or maintained as it is. If the asset is as an example a pharmaceutical product, the manufacturing of the pharmaceutical product can be optimized and it may be e.g. ensured that there is no shortage of the pharmaceutical product, and the stock status is minimized.

In a second aspect of the invention, a system for tracking in real-time the position of a shipment during transport from an origin location to a destination location where the shipment comprises a shipment-material uniquely identified via a unique shipment-material ID, where the shipment-material is configured to carry an asset during the transport, the system comprising:
- a logger device comprising a communication module and a processor for operating the communication module, where the communication module is configured to transmit during transport the position data of the logger device and thus of the asset in real-time to an external control computer, where the logger device is uniquely identified via a unique logger device ID, wherein the system further comprises:
- a pairing device for performing, prior to the start of the transport, a shipment-material pairing by means of a pairing device, between the unique logger device ID with the unique shipment-material ID,
- an attachment mechanism for attaching the logger device to the shipment-material,
- an input device for preparing, a shipment order for the shipment, where the shipment order contains information including the type of asset and destination location of the asset,
- an external control computer for receiving, in response to the generated shipment order, a unique electronic shipment order ID for the shipment order, and performing a shipment order pairing by means of pairing the unique shipment-material ID with the unique electronic shipment order ID, where at the end of the shipment and after the asset has been delivered the shipment-material pairing between the unique logger device ID with the unique shipment-material ID is maintained while the shipment order pairing is terminated.

In an embodiment, the attachment mechanism comprises a compartment on the outer or inner side of the shipment-material where the logger can be deposited into, or any type of magnet on the outer or inner side of the shipment material, adhesive material and the like.

The data retrieving device comprises in one embodiment a scanning device such as a phone containing a camera or any type of a portable scanning device.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figures 1 shows a flowchart of a method according to the present invention for real-time position tracking of an asset during transport from an origin location to a destination location.
Figure 2 depicts graphically an implementation of the method discussed in relation to figure 1,
Figure 3 shows a scenario starting from the origin location discussed in relation to figure 2, and
Figure 4 depicts where the shipment-material together with logger device is transported by the transport means from a final destination location back to returning location.

### DESCRIPTION OF EMBODIMENTS

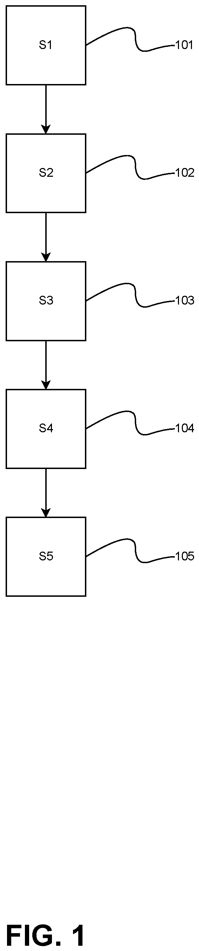

Figure 1 shows a flowchart of a method according to the present invention for tracking in real-time the position of a shipment during transport from an origin location to a destination location where the shipment comprises a shipment-material uniquely identified via a unique shipment-material ID, where the shipment-material is configured to carry an asset during the transport. The asset may include pharmaceutical products, beverages, food products, sensitive electronics, just to mention few.

In step (S1) 101, a logger device is provided configured to be attached to the shipment-material, where the logger device comprises a power source, a communication module and a processor for operating the power source and the communication module. The communication module is configured to transmit during transport the position data of the logger device and thus of the asset in real-time to an external control computer. The logger device is uniquely identified via a unique logger device ID. The shipment-material may be a pallet, a box, container or any means capable of carrying the asset from an origin location to a destination location. The shipment-material may also be understood as any type of transport vehicle that transports the asset such as motorized vehicle and aerial vehicle.

The communication module may in an alternative embodiment further be configured to transmit information about the power source's status data of the logger device to the external control computer, where the external computer is further configured to utilize the power source's status data in planning the use of the logger device for upcoming shipments.

In step (S2) 102, a shipment-material pairing is performed by means of a pairing device, prior to the start of the shipment, between the unique logger device ID with the unique asset ID.

In step (S3) 103, a shipment order is prepared for the shipment via an input device, such as via any type of a computer, where the shipment order contains information including the type of asset and destination location of the asset. Other information may include type of the asset, the amount of asset, the transmission frequency of the logger device etc..

In step (S4) 104, in response to the generated shipment order, a unique electronic shipment order ID is issued for the shipment order.

In step (S5) 105, a shipment order pairing is performed by means of pairing the unique shipment-material ID with the unique electronic shipment order ID.

The above-mentioned pairings are in an alternative embodiment performed at the external control computer, where the logger device ID, the shipment-order ID and the electronic shipment order ID is stored.

At the end of the shipment and after the asset has been delivered the shipment-material pairing between the unique logger device ID with the unique shipment-material ID is maintained while the shipment order pairing is terminated thus enabling the shipment-material together with the paired logger device to be used in multiple of separated shipments having different unique electronic shipment order IDs. In that way, the shipment-material in the absence of the asset may be always monitored in real time. The termination of the shipment order may be triggered via geofence in the vicinity of the destination location and/or via an operator that closes the shipment and confirms that the asset has been received.

In an embodiment, at least one measuring device at least one environmental related parameter of the asset such as the temperature, humidity, vibration, just to mentioned few, may be measured by appropriate sensor(s) comprised in the logger device and where the communication module is further configured to transmit the at least one environmental related parameter of the asset to the external control computer.

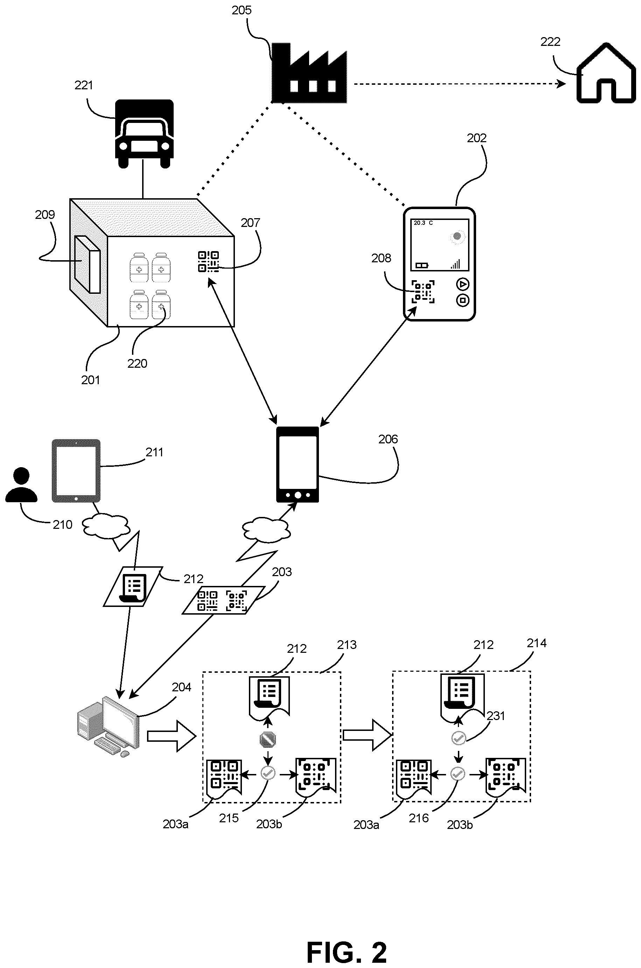

Figure 2 depicts graphically an implementation of the method discussed in relation to figure 1 for real-time tracking of a shipment during transport of the shipment with a transport vehicle 221 (or any type of a transport means) from an origin location 205 to a destination location 222, where the destination may as an example be a retail distributor. The shipment comprises a shipment-material 201 such as a box as shown here, pallet, bag etc., uniquely identified via a unique shipment-material ID 207 and is configured to carry an asset 220 during the transport. As mentioned previously, the shipment-material may also be the vehicle 221 and where the asset is placed into the vehicle.

At the origin location 205 a scanning device 206, which may be any type of portable smart device, scans the QR code 207 on the shipment-material 201, and also scans a QR code 208 of a logger device 202. The scanned QR codes, which may be done automatically or manually by an operator, are subsequently transmitted as a data package 203 to an external control computer 204.

The shipment-material shown here is a box comprising a slot 209 adapted to receive the logger device 202 and removeable attaching/mounting it to the box before starting the transport from the origin location 205.

Also shown is where a shipment order is created by an operator 210 via any type of a computer device 211, whereby creating the shipment order a unique electronic shipment order ID 212 associated to the shipment order is issued and transmitted to the external control computer 204.

In this embodiment, at the external control computer side 204, a shipment-material pairing 215 between the unique logger device ID 203b with the unique shipment-material ID 203 a is performed as indicated in the dotted box 213.

Subsequently, a shipment order pairing 231 is performed as indicated by the dotted box 214 by means of pairing the paired unique shipment-material ID 203a,b with the unique electronic shipment order ID 212.

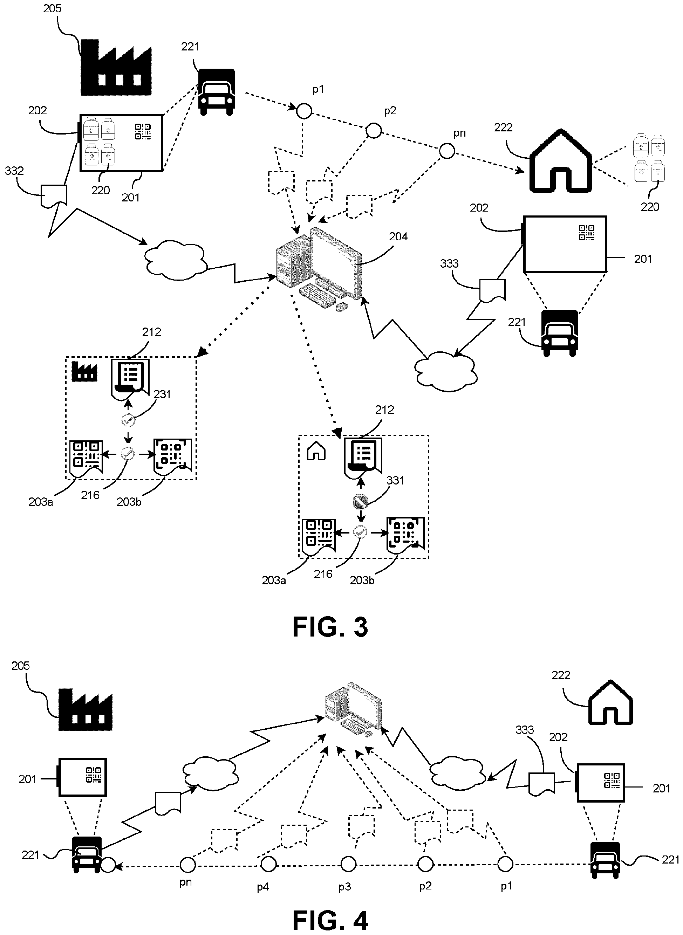

Figure 3 shows a scenario starting from the origin location discussed in relation to figure 2, where the shipment order pairing 231 has been completed by means of pairing the paired 216 unique shipment-material ID 203a,b with the unique electronic shipment order ID 212 as discussed previously.

The transport of the transport-material 201 containing the asset 220 from the origin location 205 may be done by any type of transport means such as a vehicle 221, where the logger device 202 regularly transmits position data 332 to the external control computer 204. The transmitted data may further include one or more environmental related parameter such as the temperature of the asset, the humidity, light intensity, angular position, vibration/acceleration data, just to mention few. The transmission frequency may be with a fixed frequency, e.g. every 1 hour, resulting in data points p1, p2, .... , pn, during the transport within the supply chain to the final destination location.

Upon arrival at the destination location 222, which may be any kind of distribution center, the asset 220 is removed from the packaging material and the pairing 331 between the unique shipment-material ID 203a,b with the unique electronic shipment order ID 212 is terminated, whereas the shipment-material pairing 216 between the unique logger device ID with the unique shipment-material ID remains. The termination of the pairing 331n means that subsequently transmitted data include solely the position of the shipment-material 201.

Figure 4 depicts where the shipment-material 201 together with logger device 202 is transported by the transport means 221 (or any other transport means) from the destination location 222 back to a delivery side while transmitting position data p1 to pn 333 by the logger device 202, where the packaging material 201 together with the logger device is received and next shipment is prepared. As depicted here, the delivery side may be the same as the origin location 205.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of tracking in real-time the position of a shipment during transport from an origin location to a destination location where the shipment comprises a shipment-material uniquely identified via a unique shipment-material ID, where the shipment-material is configured to carry an asset during the transport, the method comprising:
• providing a logger device configure to be attached to the shipment-material, where the logger device comprises a power source, a communication module and a processor for operating the power source and the communication module, where the communication module is configured to transmit during transport the position data of the logger device and thus of the asset in real-time to an external control computer, where the logger device is uniquely identified via a unique logger device ID, wherein the method further comprises:
• performing, prior to the start of the transport, a shipment-material pairing between the unique logger device ID with the unique shipment-material ID,
• preparing, via an input device, a shipment order for the shipment, where the shipment order contains information including the type of asset and destination location of the asset,
• receiving, in response to the generated shipment order, a unique electronic shipment order ID for the shipment order, and
• performing a shipment order pairing by means of pairing the unique shipment-material ID with the unique electronic shipment order ID,
wherein at the end of the shipment and after the asset has been delivered the shipment-material pairing between the unique logger device ID with the unique shipment-material ID is maintained while the shipment order pairing is terminated.

2. The method according to claim 1, wherein the communication module is further configured to transmit information about the power source's status data of the logger device to the external control computer, where the external computer is further configured to utilize the power source's status data in planning the use of the logger device for upcoming shipments.

3. The method according to claim 1 or 2, wherein the logger device is configured to be attached on the outside or the inside of the shipment-material such as by use of an adhesive material or by inserting the logger into a designated slot on the shipment-material.

4. The method according to any of the preceding claims, wherein the unique electronic shipment ID is issued by the courier of the shipment and received by the external control computer where the shipment order pairing is performed.

5. The method according to any of the preceding claims, wherein the unique logger device ID comprises a code configured to be read and scanned by a scanning device, where the scanned code is utilized in the shipment-material pairing.

6. The method according to any of the preceding claims, wherein the shipment-material is selected from: a pallet, a box, a bag, a container or a bag.

7. The method according to any of the preceding claims, wherein the termination of the shipment order pairing triggers an inventory related signal indicating a change in the inventory of the asset.

8. The method according to any of the preceding claims, further comprises measuring by at least one measuring device at least one environmental related parameter of the asset, where the communication module is further configured to transmit the at least one environmental related parameter of the asset to the external control computer.

9. The method according to any of the preceding claims, wherein the pairing between the shipment-material and the logger, the logger and the shipment order and the shipment-material and the shipment order are mutually exclusive.

10. A system for tracking in real-time the position of a shipment during transport from an origin location to a destination location where the shipment comprises an shipment-material uniquely identified via a unique shipment-material ID, where the shipment-material is configured to carry an asset during the transport, the system comprising:
• a logger device comprising a communication module and a processor for operating the communication module, where the communication module is configured to transmit during transport the position data of the logger device and thus of the asset in real-time to an external control computer, where the logger device is uniquely identified via a unique logger device ID, wherein the system further comprises:
• a pairing device for performing, prior to the start of the transport, a shipment-material pairing between the unique logger device ID with the unique shipment-material ID,
• an attachment mechanism for attaching the logger device to the shipment-material,
• an input device for preparing a shipment order for the shipment, where the shipment order contains information including the type of asset and destination location of the asset,
• an external control computer for receiving, in response to the generated shipment order, a unique electronic shipment order ID for the shipment order, and performing a shipment order pairing by means of pairing the unique shipment-material ID with the unique electronic shipment order ID, where at the end of the shipment and after the asset has been delivered the shipment-material pairing between the unique logger device ID with the unique shipment-material ID is maintained while the shipment order pairing is terminated.

11. The system according to claim 10, wherein the attachment mechanism comprises a compartment on the outer or inner side of the shipment-material where the logger can be deposited into.

12. The system according to claim 10 or 11, wherein the data retrieving device comprises a scanning device such as a portable a portable scanning device.
